# EUROPÄISCHE PATENTSCHRIFT

(11) **EP 0 991 277 B1**
(45) Veröffentlichungstag und Bekanntmachung des Hinweises auf die Patenterteilung: **12.01.2005**
(21) Anmeldenummer: 98118671.1
(22) Anmeldetag: 02.10.1998
(51) Int. Cl.: H04N 7/088, H04N 5/445

(54) **Verfahren zur Informationsübertragung auf einen Bildschirm**
Method for information transmission on a screen
Méthode pour la transmission d'information sur un écran

(43) Veröffentlichungstag der Anmeldung: 05.04.2000
(73) Patentinhaber: Telcast International Film Production GmbH, 80805 München (DE)
(72) Erfinder: Ernst, Melanie, D-80638 München (DE)
(74) Vertreter: Finsterwald, Martin

(56) Entgegenhaltungen:
- EP-A- 0 852 361
- WO-A-97/12486
- WO-A-98/27723
- US-A- 5 233 423
- US-A- 5 610 665

## Beschreibung

Die Erfindung betrifft ein Verfahren zur Übertragung von Bildinformation auf einen Bildschirm eines Fernsehgerätes, gemäß dem Oberbegriff des Anspruchs 1.

Aus der US-A-5,610,665 ist es bekannt, in das Vertikal-Austastintervall (vertical blanking interval, VBI), eines Videosignals zusätzliche Daten zu integrieren, die von einem speziellen Decoder als Bildtexte oder Steuerbefehle interpretiert werden können, um beispielsweise Grafiken oder Fragen am Bildschirm eines Fernsehgeräts zur Darstellung zu bringen. Ein als ein derartiger Decoder konfiguriertes Unterhaltungsgerät wird mit dem Fernsehgerät verbunden. Mittels eines Steuerhebels des Unterhaltungsgeräts kann ein Zeiger entlang des Bildschirms bewegt werden, beispielsweise um eine Frage zu beantworten oder eine Grafik auszuwählen. Falls eine Frage korrekt beantwortet wird, kann der Decoder als Belohnung ein Lösungswort für ein Preisausschreiben darstellen. Auf diese Weise wird der Zuschauer dazu motiviert, eine Fernsehsendung - beispielsweise ein Lehrprogramm - vollständig zu betrachten.

Aus der EP-A-852 361 ist ein Fernsehgerät bekannt, das als JAVA-Internet-Plattform ausgebildet ist. Mittels eines Bildmischers können gleichzeitig eine Fernsehsendung und eine Seite des World Wide Web auf dem Bildschirm des Fernsehgeräts dargestellt werden. Falls der Zuschauer einen bestimmten Programmkanal einstellt, kann das Fernsehgerät automatisch eine zugeordnete Internet-Seite abrufen und am Bildschirm darstellen.

Üblicherweise wird Fernsehwerbung in Form von Werbespots, also eigenständigen vertonten Filmbeiträgen übertragen. Nachteilig an den bekannten Verfahren zur Übertragung von Werbeinformation ist deren Einseitigkeit und Eintönigkeit, die dem Zuschauer das Betrachten der damit übertragenen Werbeinformation unattraktiv erscheinen lassen. Die Darstellung der Werbeinformation wird von den potentiellen Adressaten daher vielfach dadurch umgangen, daß sie den Übertragungskanal bzw. den Fernsehsender wechseln und somit die Übertragung abbrechen. Außerdem bieten die bekannten Übertragungsverfahren keine Möglichkeit, das Akzeptanzverhalten der Zuschauer hinsichtlich der übertragenen Werbung zu analysieren.

Es ist eine Aufgabe der Erfindung, ein neues, für einen Zuschauer attraktives Verfahren zu schaffen, um Werbeinformation zu einem Fernsehgerät zu übertragen und auf dessen Bildschirm zur Darstellung bringbar zu machen, wobei die Übertragung bzw. Darstellung insbesondere unter Ausnutzung der im wesentlichen bestehenden technischen Möglichkeiten erfolgen soll. Das neuartige Übertragungsverfahren soll den Fernsehzuschauer dazu anregen, Werbeinformation auf dem Bildschirm seines Fernsehgerätes zur Darstellung zu bringen bzw. die laufende Darstellung von Werbeinformation nicht durch Wechseln des Fernsehsenders zu unterbrechen. Gemäß einer zusätzlichen Aufgabe soll es die Erfindung insbesondere ermöglichen, Informationen über das Akzeptanzverhalten der Zuschauer hinsichtlich der Übertragung von Werbeinformation zu erhalten.

Erfindungsgemäß wird diese Aufgabenstellung durch ein Verfahren mit den Merkmalen des Anspruchs 1 gelöst.

Dieses erfindungsgemäße Übertragungsverfahren zeichnet sich also dadurch aus, daß die zu übertragende Werbeinformation und die Motitvationsinforination für den Fernsehzuschauer untrennbar zu einer einzigen Bildinformation bzw. einem einzigen Bildsignal gekoppelt werden. Durch die in der Bildinformation enthaltene Motivationsinformation wird der Zuschauer dazu motiviert, die Bildinformation auf dem Bildschirm seines Fernsehgerätes zur Darstellung zu bringen, was er nach seinem Belieben durch das Aktivieren des Abrufkommandos veranlassen kann. Hingegen erlaubt es das erfindungsgemäße Verfahren dem Zuschauer nicht, lediglich die Motivationsinformation - ohne die Werbeinformation - auf dem Bildschirm zur Darstellung zu bringen. Durch das erfindungsgemäße Übertragungsverfahren wird dem Zuschauer also die Betrachtung der Werbeinformation freigestellt, wobei er hierzu durch die Motivationsinformation animiert werden kann.

Nach Abgabe des Abrufkommandos erfolgt die Darstellung der Bildinformation derart, daß sie gegenüber der Darstellung der laufenden Fernsehsendung vordergründig abgesetzt ist. Die Abgabe von einer dieser Fernsehsendung zugeordneten akustischen Information sowie deren Wahrnehmung durch den Zuschauer wird durch die Darstellung der Bildinformation nicht beeinträchtigt.

Bei der Bildinformation handelt es sich um eine Videotext-Seite, welche in ihrer Darstellung auf dem Fernsehbildschirm sowohl die Werbeinformation als auch die Motivationsinformation enthält, und welche beispielsweise durch Eingabe einer entsprechenden Videotext-Seitennummer in die Fernbedienung des Fernsehgerätes von dem Zuschauer wahlweise aufgerufen, d.h. auf dem Bildschirm zur Darstellung gebracht werden kann. Durch dieses Abrufen wird die Videotext-Seite der parallel auf dem Bildschirm dargestellten Fernsehsendung vordergründig überlagert, wenn der Zuschauer dies wünscht.

Bei dem im Zusammenhang mit der Erfindung genannten Fernsehgerät kann es sich auch um einen Computer, insbesondere um einen Personal Computer (PC) oder ein Internet-Terminal handeln, falls dieser Computer dazu geeignet ist, die genannten Bildsignale von außen zu empfangen und die darin enthaltene Bildinformation auf einem Bildschirm darzustellen.

Dementsprechend ist unter dem im Zusammenhang mit der Erfindung genannten Bildschirm gegebenenfalls auch ein Monitor eines Computers zu verstehen.

Es ist ein Vorteil des erfindungsgemäßen Verfahrens, daß es eine neue Möglichkeit zur Übertragung von Fernseh-Werbeinformation schafft, für welche die bestehende Übertragungs- und Fernsehtechnologie verwendet werden kann. Durch die Verschmelzung der Werbeinformation mit einer Motivationsinformation zu einer einheitlichen Bildinformation bzw. zu einem einheitlichen Bildsignal wird der Zuschauer dazu motiviert, die Werbeinformation zu betrachten, insbesondere parallel zu einer laufenden Fernsehsendung. Die durch das erfindungsgemäße Verfahren eingeräumte Möglichkeit, die Werbeinformation bzw. die Bildinformation freiwillig zuzuschalten, erhöht die Akzeptanz beim Zuschauer.

Die Bildinformation kann auf dem Fernsehbildschirm statisch dargestellt werden, d.h. als ein während eines bestimmten Zeitintervalls im wesentlichen unverändertes Standbild. Diese Ausführungsform des erfindungsgemäßen Verfahrens läßt sich mit besonders einfachen, im Falle einer Videotext-Seite mit bekannten technischen Mitteln realisieren. Alternativ hierzu kann die Bildinformation dynamisch dargestellt werden, d.h. in kontinuierlicher Bewegung oder Veränderung, ähnlich einer regulären Fernsehsendung. Beispielsweise kann die Werbeinformation als kontinuierlich laufendes Text-Band auf dem Bildschirm dargestellt werden, während die Motivationsinformation für den Zuschauer unverändert erscheint.

Es ist bevorzugt, wenn der Inhalt und/oder die Übertragungsdauer der Bildinformation dem inhaltlichen Verlauf der gleichzeitig auf dem Bildschirm dargestellten Fernsehsendung individuell angepaßt wird. Hierzu ist es nach der Erfindung möglich, die Bildinformation lediglich während des dieser Bildinformation zugeordneten Übertragungs-Zeitintervalls zu dem Fernsehgerät übertragen. Nach Ablauf dieses Übertragungs-Zeitintervalls kann - im direkten Anschluß oder mit einer bestimmten zeitlichen Verzögerung - ein weiteres Übertragungs-Zeitintervall folgen, in welchem ein anderes Bildsignal zu dem Fernsehgerät übertragen wird.

Auf diese Weise ist während dieses weiteren Übertragungs-Zeitintervalls eine andere Bildinformation auf dem Bildschirm darstellbar, oder diese andere Bildinformation wird gegebenenfalls als Ersatz der Darstellung einer vorhergehenden Bildinformation automatisch zur Darstellung gebracht. Die andere Bildinformation kann sich von der gegebenenfalls vorhergehenden Bildinformation entweder in der Werbeinformation, der Motivationsinformation oder in der Werbe- und der Motivationsinformation unterscheiden, aus denen die Bildinformationen jeweils zusammengesetzt werden.

Die Übertragung einer oder mehrerer Bildinformationen während jeweils zugeordneter Übertragungs-Zeitintervalle ermöglicht - mit anderen Worten - einen beliebigen Wechsel zwischen darstellbaren Bildinformationen und ermöglicht es zudem, die Darstellung von Bildinformationen während der zwischen diesen Übertragungs-Zeitintervallen gelegenen Zeiträumen zu unterbrechen, selbst wenn der Zuschauer die Übertragung bzw. Darstellung von Bildinformation durch ein einmaliges Abrufkommando prinzipiell aktiviert hat.

Die einem Wechsel der Bildinformation - und somit der Werbeinformation oder der Motivationsinformation - jeweils zugrundeliegenden Übertragungs-Zeitintervalle können bereits vor dem Übertragen der parallel auf dem Bildschirm dargestellten Fernsehsendung festgelegt werden, oder sie können - insbesondere bei der Darstellung von Live-Übertragungen - erst während der Übertragung definiert werden. In beiden Fällen ist es bevorzugt, den Zeitpunkt der Änderung der Bildinformation dem Auftreten markanter inhaltlicher Änderungen der übertragenen Fernsehsendung anzugleichen. Die genannten Zeitintervalle können beispielsweise im Bereich von mehreren Sekunden oder mehreren Minuten liegen. Vorzugsweise ist während der Übertragung einer Fernsehsendung die Darstellung einer Mehrzahl von aufeinanderfolgenden Bildinformationen vorgesehen.

Weiterhin ist es möglich, eine lediglich eine Motivationsinformation enthaltende Bildinformation in ein Bildsignal umzuwandeln und dieses Bildsignal während eines zugeordneten Motivations-Zeitintervalls zu dem Fernsehgerät zu übertragen. Dadurch kann die Motivationsinformation auf dem Bildschirm dargestellt werden, ohne daß gleichzeitig Werbeinformation gezeigt wird. Die Auswahl, Dauer und Abfolge der Motivations-Zeitintervalle können analog zu den Übertragungs-Zeitintervallen der Bildinformationen erfolgen. Das Abwechseln von Übertragungs-Zeitintervallen und Motivations-Zeitintervallen, d.h. das Abwechseln der Übertragung von Motivations- sowie Werbeinformation zusammen und Motivations- ohne Werbeinformation, kann den Zuschauer dazu anregen, die Darstellbarkeit der Bildinformation dauerhaft zu aktivieren.

Die vorstehend erläuterte Anpassung der Übertragungs-Zeitintervalle, der Motivations-Zeitintervalle, des Inhalts der Werbeinformation bzw. des Inhalts der Motivationsinformation an den inhaltlichen Verlauf einer im Hintergrund auf dem Bildschirm dargestellten Fernsehsendung erfolgt in einer bevorzugten Ausführungsform der Erfindung automatisch, insbesondere aufgrund von dem inhaltlichen Verlauf der Fernsehsendung zugeordeneten Auslösesignalen oder aufgrund von eigenständiger Erkennung von Elementen des Inhalts der Fernsehsendung, beispielsweise mittels eines Bildverarbeitungsverfahrens. Diese automatische Anpassung kann beispielsweise dadurch unterstützt werden, daß für den Inhalt der Werbeinformation bzw. den Inhalt der Motivationsinformation eine zuvor bestimmte Auswahl vorgesehen wird.

Die Werbeinformation kann in ihrer Darstellung auf dem Fernsehbildschirm eine Textinformation enthalten, beispielsweise einen Werbeslogan, eine graphische Information, wie z.B. ein Firmen- oder Produktlogo, eine bildliche Darstellung eines Produkts oder eine Kombination hiervon.

Die Darstellung der Motivationsinformation auf dem Bildschirm kann aus Text, Buchstaben, Ziffern und/oder einer graphischen Information bestehen.

Die vorstehend beschriebenen Ausführungsformen der Erfindung werden im folgenden anhand einer nicht abschließenden Aufzählung von Beispielen erläutert:
a) Die Motivationsinformation kann ein Lösungswort enthalten. Dessen Buchstaben werden vorzugsweise nicht gleichzeitig dargestellt, sondern in mehreren statischen Bildinformationen über die Dauer einer zugeordneten übertragenen Fernsehsendung zeitlich verteilt. In gleicher Weise kann die Motivationsinformation aus einer Telefonnummer bestehen, deren einzelne Ziffern lediglich nach und nach übertragen bzw. dargestellt werden. In beiden Fällen kann der Fernsehzuschauer durch die Möglichkeit einer Belohnung dazu motiviert werden, die Motivationsinformation - und somit auch die Werbeinformation - während der gesamten Dauer der Fernsehsendung parallel zu dieser auf dem Bildschirm darzustellen. Diese Belohnung kann beispielsweise aus einem Sach- oder Geldpreis bestehen, der im Rahmen eines Preisausschreibens verlost wird, zu dem der Zuschauer lediglich bei Kenntnis des vollständigen Lösungswortes bzw. der vollständigen Telefonnummer Zugang erhält.
   Falls der Zuschauer auch die Möglichkeit hat, beispielsweise in Form von "Pay-TV" kostenpflichtige Übertragungen von Fernsehsendungen zu empfangen, so kann die Belohnung auch aus Bonus-Zeit bestehen, in der der Zuschauer diese Sendungen kostenlos empfangen kann.
   Eine derartige Bonus-Zeit kann dem Zuschauer überdies allein aufgrund der Tatsache gutgeschrieben werden, daß er die Bildinformation mit einer Werbeinformation oder gegebenenfalls eine Werbeinformation ohne eigentliche Motivationsinformation aufgerufen hat, und zwar in Abhängigkeit von der Dauer der Darstellung der Bildinformation bzw. der Werbeinformation auf dem Bildschirm.
b) Die Motivationsinformation kann in ihrer Darstellung auf dem Fernsehbildschirm einen graphischen Code in Form eines sogenannten "DOT"-Symbols enthalten, der zur Belichtung einer Speichervorrichtung dient, wie sie in der europäischen Patentschrift EP 0 710 414 B1 beschrieben ist. Diese Speichervorrichtung kann so beschaffen sein, daß sie eine bestimmte Mindest-Belichtungsdauer erfordert, entsprechend der Zeitdauer, während der der Zuschauer die Bildinformation einschließlich der darin enthaltenen Werbeinformation aufrufen soll. Die Motivation für die Darstellung des graphischen Codes bzw. die Belichtung der Speichervorrichtung kann auch in diesem Fall aus einer Belohnung in Form eines Geldoder Sachpreises bestehen, der beispielsweise durch Einsenden der belichteten Speichervorrichtung erlangt werden kann.
c) Der Inhalt der Werbeinformation kann in einer jeweils sinnvollen Weise dem Verlauf der parallel auf dem Fernsehbildschirm dargestellten Fernsehsendung angepaßt werden:
   Falls beispielsweise während eines Films ein Darsteller in eine Badewanne steigt, kann genau zu diesem Zeitpunkt Werbung für eine bestimmte Schaumbad-Marke eingeblendet werden.
   Bei einer Live-Übertragung eines Skirennens ist es beispielsweise möglich, nach Beendigung des entscheidenden Laufes Werbung für den Hersteller der Ski des Siegers einzublenden. Hierfür kann vor Übertragung des Skirennens eine Auswahl von verschiedenen Werbeinformationen festgelegt worden sein, die den Produkten jeweils eines der Hersteller zugeordnet sind. Sobald der Hersteller der Ski des Siegers feststeht, kann die Einblendung der entsprechenden Werbeinformation automatisch erfolgen.
d) Falls eine Fernsehsendung durch einen Werbespot unterbrochen wird, kann während der Dauer dieses Werbespots zumindest zeitweise Nachrichtentext im Vordergrund des Bildschirms dargestellt werden, um dadurch den Zuschauer dazu zu motivieren, die Darstellung des Werbespots nicht durch Wechseln des Übertragungskanals zu unterbrechen. Bei dem Nachrichtentext handelt es sich also um Bildinformation in Form von reiner Motivationsinformation, während gleichzeitig Werbeinformation in dem Werbespot enthalten ist. Der Nachrichtentext kann derart im Vordergrund des Bildschirms dargestellt werden, daß gleichzeitig das Betrachten des Werbespots im Hintergrund im wesentlichen möglich ist. Es ist jedoch auch möglich, den Werbespot vollständig mit dem Nachrichtentext zu überdecken und den Werbespot auf diese Weise auszublenden.

Hier existiert natürlich eine Vielzahl weiterer Möglichkeiten.

Bei den vorstehend erläuterten Ausführungsformen des erfindungsgemäßen Verfahrens kann die Möglichkeit, eine bestimmte Bildinformation und mit dieser eine bestimmte Motivationsinformation auf dem Bildschirm darzustellen, davon abhängig gemacht werden, ob gleichzeitig eine zugeordnete Fernsehsendung dargestellt wird bzw. ein zugeordneter Übertragungskanal aktiviert ist. Alternativ ist es möglich, die Darstellung jeweils derselben Bildinformation oder zumindest derselben Motivationsinformation auch bei der Betrachtung von Fernsehsendungen unterschiedlicher, ausgewählter Fernsehkanäle zu erlauben. Hierfür kann der Bildinformation bzw. der Motivationsinformation unabhängig von der Wahl des Fernsehsenders jeweils das gleiche Abrufkommando zugeordnet sein.

Beispielsweise können, da die Bildinformation in einer Videotext-Seite enthalten ist, bei verschiedenen Fernsehsendern Videotext-Seiten mit jeweils gleichlautender Nummer für die Bildinformation vorgesehen sein, wobei es sich vorzugsweise um eine einprägsame Nummer handelt. Dadurch kann der Fernsehzuschauer die Motivationsinformation unabhängig davon auf seinem Fernsehbildschirm darstellen, welchen Fernsehsender er angewählt hat.

Vorzugsweise wird die Bildinformation aus der Werbeinformation und der Motiviationsinformation derart zusammengesetzt, daß ihre Darstellung auf dem Fernsehbildschirm das gleichzeitige Betrachten einer im Hintergrund des Bildschirms dargestellten Fernsehsendung im wesentlichen erlaubt, beispielsweise indem die Darstellung der Bildinformation auf einem Randbereich des Bildschirms erfolgt. Beispielsweise kann die Bildinformation in die schwarzen Streifen eingeblendet werden, die bei der Darstellung eines für das Kinoformat gedrehten Films auf dem Fernsehbildschirm üblicherweise entstehen.

Es ist jedoch auch möglich, daß die Bildinformation den Vordergrund des Bildschirms zumindest zeitweise vollflächig einnimmt. Dadurch kann eine eigentlich im Hintergrund dargestellte Fernsehsendung vollständig überdeckt werden.

Insbesondere bei der Übertragung der Bildinformation zu einem als Fernsehgerät dienendem Computer ist es auch möglich, die Bildinformation innerhalb eines Fensters auf dem Bildschirm darzustellen, das vom Zuschauer bzw. Anwender beliebig aufgerufen, geschlossen oder in seiner Lage bezüglich des Bildschirms verschoben werden kann.

Zur Lösung der zusätzlichen Aufgabe der Erfindung kann das Fernsehgerät oder ein mit diesem gekoppeltes Zusatzgerät eine Auswerteinformation darüber abgeben, zu welchen Zeiten die Bildinformation in Folge des entsprechenden Abrufkommandos auf dem Bildschirm dargestellt wird bzw. war. Derartige Auswerteinformationen erlauben eine Analyse der Akzeptanz einer Bildinformation bzw. verschiedener Arten abrufbarer Bildinformation und ermöglichen es daher, die erfindungsgemäßen Verfahren noch gezielter einzusetzen. Bei dem genannten Zusatzgerät kann es sich insbesondere um eine Decodereinrichtung handeln, die zur kostenpflichtigen Entschlüsselung der zu übertragenden Bildsignale in regulär auf dem Bildschirm darstellbare Signale dient, beispielsweise um die "d-box". Es ist besonders vorteilhaft, wenn dieses Zusatzgerät es gleichzeitig ermöglicht, einem Zuschauer die vorstehend unter a) genannten Bonus-Zeiten zuzuweisen bzw. gutzuschreiben.

Weitere bevorzugte Ausführungsformen der Erfindung sind in den Unteransprüchen beschrieben.

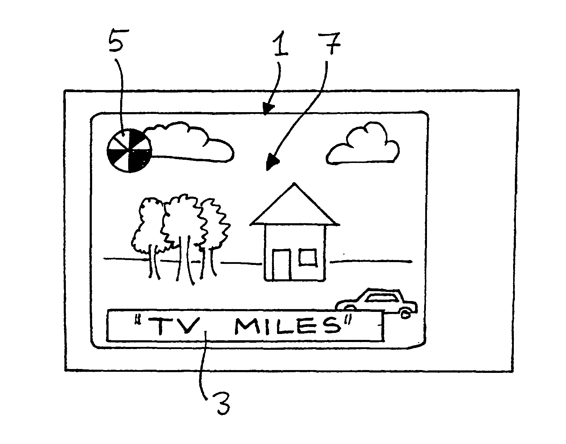

Die Erfindung wird nachfolgend anhand eines Ausführungsbeispiels unter Bezugnahme auf die einzige Figur erläutert. Diese zeigt in schematischer Frontansicht ein Fernsehgerät mit einem Bildschirm 1. Auf dem Bildschirm 1 sind entlang seines unteren Randbereichs eine Werbeinformation 3 in Form eines Werbeslogans und in der oberen linken Ecke eine Motivationsinformation 5 in der Form eines graphischen "DOT"-Symbols dargestellt. Des weiteren ist auf dem Bildschirm 1 eine momentane Szene 7 einer Fernsehsendung dargestellt. Die Darstellung der Szene 7 erfolgt bezüglich der Werbeinformation 3 und der Motivationsinformation 5 im Hintergrund, d.h. die Werbeinformation 3 und die Motivationsinformation 5 überdecken die Szene 7.

Die Werbeinformation 3 und die Motivationsinformation 5 bilden eine einheitliche Bildinformation, die der Zuschauer parallel zu der Darstellung der Szene 7 auf dem Bildschirm 1 durch entsprechenden Befehl an der Fernbedienung des Fernsehgerätes abrufen kann. Der Inhalt der Motivationsinformation 5 soll den Zuschauer dazu motivieren, die Darstellung der Bildinformation zu veranlassen und während einer längeren Zeitdauer beizubehalten. In dem gezeigten Beispiel kann das graphische Symbol 5 dazu verwendet werden, eine in der Figur nicht dargestellte Speichervorrichtung entsprechend zu belichten, beispielsweise um an einem von dem Fernsehsender ausgeschriebenen Preisausschreiben teilnehmen zu können.

Die Werbeinformation 3 ist in der Bildinformation fest enthalten. Der Zuschauer kann also ihre Einblendung nicht verhindern, solange er die Darstellung der Motivationsinformation 5 veranlaßt. Es ist jedoch von seiten des Fernsehsenders möglich, zeitweise lediglich eine Motivationsinformation 5 zu übertragen, d.h. eine Bildinformation, welche diese Motivationsinformation 5, jedoch keine Werbeinformation 3 enthält. In ähnlicher Weise kann der Inhalt der Werbeinformation 3 insbesondere in Abhängigkeit von inhaltlichen Änderungen der Szene 7 der Fernsehsendung geändert werden, während die Motiviationsinformation 5 gleichzeitig für den Zuschauer unverändert bleibt.

Falls es sich bei der Werbeinformation - wie in der Figur dargestellt - um Buchstaben oder um Ziffern handelt, müssen diese den Hintergrund, also die Szene 7, nicht als Text-Band vollständig flächig überdecken, sondern können lediglich mit ihren eigentlichen Konturen im Vordergrund dargestellt werden, während Zwischenräume, wie beispielsweise der von dem Buchstaben "O" eingeschlossene Vollkreis, transparent bezüglich des Hintergrunds erscheinen können.

### Bezugszeichenliste

- 1: Bildschirm
- 3: Werbeinformation
- 5: Motivationsinformation
- 7: Szene

## Patentansprüche

1. Verfahren zur Übertragung einer Bildinformation auf einen Bildschirm (1) eines Fernsehgerätes,
wobei die Bildinformation eine Motivationsinformation (5) enthält, die aus Buchstaben, Ziffern oder einem graphischen Code aufgebaut ist und die ein Lösungswort, eine Telefonnummer oder einen graphischen Zugangscode für ein Preisausschreiben enthält,
wobei die Bildinformation in ein Bildsignal umgewandelt wird, welches während eines dieser Bildinformation zugeordneten Übertragungs-Zeitintervalls zu dem Fernsehgerät übertragen wird,
wobei die in dem Bildsignal enthaltene Bildinformation infolge eines entsprechenden Abrufkommandos auf dem Bildschirm als Vordergrund darstellbar ist, und
wobei die Darstellung der Bildinformation das gleichzeitige Betrachten einer im Hintergrund auf dem Bildschirm dargestellten Fernsehsendung (7) ermöglicht,
**dadurch gekennzeichnet,**
**daß** es sich bei der Bildinformation um eine Videotext-Seite handelt, und daß die Bildinformation aus der Motivationsinformation (5) und einer Werbeinformation (3) zusammengesetzt wird.

2. Verfahren nach Anspruch 1,
**dadurch gekennzeichnet,**
**daß** es sich bei dem Abrufkommando um einen von einer Fembedienung abgesetzten Steuerbefehl handelt.

3. Verfahren nach einem der vorhergehenden Ansprüche,
**dadurch gekennzeichnet ,**
**daß** der Beginn und/oder die Dauer des Übertragungs-Zeitintervalls und/oder der Inhalt der Werbeinformation und/oder der Inhalt der Motivationsinformation in Abhängigkeit von dem inhaltlichen Verlauf der Fernsehsendung festgelegt werden.

4. Verfahren nach Anspruch 3,
**dadurch gekennzeichnet,**
**daß** zur entsprechenden Festlegung des Übertragungs-Zeitintervalls bzw. der Werbeinformation bzw. der Motivationsinformation der inhaltliche Verlauf der Fernsehsendung automatisch, insbesondere aufgrund einer vorbestimmten Auswahl, erkannt wird.

5. Verfahren nach einem der vorhergehenden Ansprüche,
**dadurch gekennzeichnet,**
**daß** während der Übertragung einer Fernsehsendung mehrere Übertragungs-Zeitintervalle vorgesehen werden, die jeweils direkt aufeinanderfolgen oder zeitlich voneinander beabstandet sind.

6. Verfahren nach einem der vorhergehenden Ansprüche,
**dadurch gekennzeichnet,**
**daß** eine lediglich eine Motivationsinformation enthaltende Bildinformation in ein Bildsignal umgewandelt wird, und
**daß** dieses Bildsignal während eines der Motivationsinformation zugeordneten Motivations-Zeitintervalls zu dem Fernsehgerät übertragen wird, auf dessen Bildschirm die Motivationsinformation als Vordergrund darstellbar ist.

7. Verfahren nach Anspruch 6,
**dadurch gekennzeichnet,**
**daß** während der Übertragung einer Fernsehsendung sowohl wenigstens ein Übertragungs-Zeitintervall als auch wenigstens ein Motivations-Zeitintervall übertragen werden, die jeweils direkt aufeinanderfolgen oder zeitlich voneinander beabstandet sind.

8. Verfahren nach einem der vorhergehenden Ansprüche,
**dadurch gekennzeichnet ,**
**daß** auch bei nacheinander erfolgender Darstellung von Fernsehsendungen unterschiedlicher Fernsehsender auf dem Bildschirm ein jeweils im wesentlichen gleiches Abrufkommando, insbesondere eine gleichlautende Nummer einer Videotext-Seite, die Darstellung einer gleichen oder gleichartigen Motivationsinformation bewirkt.

9. Verfahren nach einem der vorhergehenden Ansprüche,
**dadurch gekennzeichnet,**
**daß** die Bildinformation derart zusammengesetzt wird, daß ihre Darstellung auf einem Randbereich des Bildschirms des Fernsehgerätes erfolgt.

10. Verfahren nach einem der vorhergehenden Ansprüche,
**dadurch gekennzeichnet ,**
**daß** das Fernsehgerät oder ein mit diesem gekoppeltes Zusatzgerät eine Auswerteinformation darüber abgibt,
ob die Bildinformation infolge des Abrufkommandos momentan auf dem Bildschirm dargestellt wird und/oder
zu welchen Zeiten die Bildinformation auf dem Bildschirm dargestellt war.

## Claims

1. A method for the transmission of image information to a screen (1) of a television set,
wherein the image information includes some motivation information (5) made up of letters, digits or a graphical code and including a solution word, a telephone number or a graphical access code for a competition,
wherein the image information is converted into an image signal which is transmitted to the television set during a transmission time interval associated with this image information,
wherein the image information contained in the image signal can be presented on the screen as a foreground as a consequence of a corresponding call-up command, and
wherein the presentation of the image information permits the simultaneous observation of a television programme (7) presented in the background on the screen,
**characterised in that**
the image information is a videotext page; and **in that** the image information is composed of the motivation information (5) and of advertising information (3).

2. A method in accordance with claim 1, **characterised in that** the call-up command is a control command sent out by a remote control.

3. A method in accordance with any one of the preceding claims, **characterised in that** the start and/or the duration of the transmission time interval and/or the content of the advertising information and/or the content of the motivation information is/are fixed in dependence on the content development of the television programme.

4. A method in accordance with claim 3, **characterised in that** the content development of the television programme is recognized automatically, in particular on the basis of a pre-determined selection, for the corresponding fixing of the transmission time interval or of the advertising information or of the motivation information.

5. A method in accordance with any one of the preceding claims, **characterised in that** a plurality of transmission time intervals are provided during the transmission of a television programme and each follow one another directly or are spaced apart from one another in time.

6. A method in accordance with any one of the preceding claims, **characterised in that** image information containing only motivation information is converted into an image signal; and **in that** this image signal is transmitted, during a motivation time interval associated with the motivation information, to that television set on whose screen the motivation information can be presented as foreground information.

7. A method in accordance with claim 6, **characterised in that** both at least one transmission time interval and at least one motivation time interval are transmitted during the transmission of a television programme and each follow one another directly or are spaced apart from one another in time.

8. A method in accordance with any one of the preceding claims, **characterised in that** a respective substantially like call-up command, in particular an identical number of a videotext page, brings about the presentation of like or similar motivation information even with the successively occurring presentation of television programmes of different television stations on the screen.

9. A method in accordance with any one of the preceding claims, **characterised in that** the image information is composed such that its presentation takes place on a marginal area of the screen of the television set.

10. A method in accordance with any one of the preceding claims, **characterised in that** the television set or an additional device coupled therewith transmits evaluation information on whether the image information is currently presented on the screen as a result of the call-up command and/or at which times the image information was presented on the screen.

## Revendications

1. Procédé de transmission d'une information image sur un écran (1) d'un téléviseur,
l'information image contenant une information de motivation (5) qui est constituée par des lettres, des chiffres ou par un code graphique, et qui contient un mot de passe, un numéro de téléphone ou un code d'accès graphique pour un concours,
l'information image étant convertie en un signal d'image qui est transmis au téléviseur pendant un intervalle de temps de transmission associé à cette information image,
l'information image contenue dans le signal d'image pouvant être représentée comme avant-plan sur l'écran à la suite d'un ordre d'appel correspondant, et
la représentation de l'information image permettant l'observation simultanée d'une émission de télévision (7) représentée en arrière-plan sur l'écran,
**caractérisé en ce que**
l'information image est une page de vidéotexte, et **en ce que** l'information image est composée de l'information de motivation (5) et d'une information publicitaire.

2. Procédé selon la revendication 1, **caractérisé en ce que** l'ordre d'appel est un ordre de commande lancé par une télécommande.

3. Procédé selon l'une des revendications précédentes, **caractérisé en ce que** le début et/ou la durée de l'intervalle de temps de transmission et/ou le contenu de l'information publicitaire et/ou le contenu de l'information de motivation sont définis en fonction du déroulement concernant le contenu de l'émission de télévision.

4. Procédé selon la revendication 3, **caractérisé en ce que** pour définir de manière correspondante l'intervalle de temps de transmission ou de l'information publicitaire ou de l'information de motivation, le déroulement concernant le contenu de l'émission de télévision est automatiquement reconnu, en particulier en raison d'une sélection prédéterminée.

5. Procédé selon l'une des revendications précédentes, **caractérisé en ce que** pendant la transmission d'une émission de télévision sont prévus plusieurs intervalles de temps de transmission qui se succèdent directement les uns aux autres respectivement ou qui sont espacés les uns des autres dans le temps.

6. Procédé selon l'une des revendications précédentes, **caractérisé en ce qu'**une information image contenant uniquement une information de motivation est convertie en un signal d'image, et **en ce que** pendant un intervalle de temps de motivation associé à l'information de motivation, ce signal d'image est transmis au téléviseur sur l'écran duquel l'information de motivation peut être représentée comme avant-plan.

7. Procédé selon la revendication 6, **caractérisé en ce que** pendant la transmission d'une émission de télévision sont transmis à la fois au moins un intervalle de temps de transmission et au moins un intervalle de temps de motivation, qui se succèdent directement l'un à l'autre ou qui sont espacés l'un de l'autre dans le temps.

8. Procédé selon l'une des revendications précédentes, **caractérisé en ce que** même en cas de représentation consécutive d'émissions de télévision de différents émetteurs de télévision sur l'écran, un ordre d'appel respectif sensiblement identique, en particulier un numéro identique d'une page de vidéotexte, provoque la représentation d'une information de motivation qui est identique ou similaire.

9. Procédé selon l'une des revendications précédentes, **caractérisé en ce que** l'information image est composée de telle sorte que sa représentation a lieu sur une région de bord de l'écran du téléviseur.

10. Procédé selon l'une des revendications précédentes, **caractérisé en ce que** le téléviseur ou un appareil additionnel couplé à celui-ci donne une information d'évaluation sur le fait que
l'information image à la suite de l'ordre d'appel est représentée momentanément sur l'écran et/ou
à quels moments l'information image était-elle représentée sur l'écran.
